# EUROPEAN PATENT APPLICATION

(11) **EP 2 675 106 A1**
(43) Date of publication of application: **18.12.2013**
(21) Application number: 12165200.2
(22) Date of filing: 23.04.2012
(51) Int. Cl.: H04L 9/08, H04L 29/06, G06F 21/30

(54) **Industrial automation and control device user access**

(71) Applicant: ABB Technology AG, 8050 Zürich (CH)
(72) Inventor: Alvarez, Fernando, 5417 Untersiggenthal (CH); Hohlbaum, Frank, 79713 Bad Säckingen (DE); Meuli, Martin, 8532 Warth (CH)
(74) Representative: ABB Patent Attorneys

(57) **Abstract**

The present invention provides a solution for simplified user access to IEDs in industrial or utility operating environments compatible with IEC 62351-8, in particular to IEDs having an LHMI with a restricted IED key set. A central Access Enabler assigns a short and temporary session secret to a previously authenticated user, and at the same time forwards the session secret to an IED for subsequent local user validation by the IED. A user session at the IED is remotely initiated by the Access Enabler, with the IED screen being instantaneously locked by means of the session secret.

## Description

### FIELD OF THE INVENTION

The invention relates to the field of central user account management in Industrial Automation and Control Systems, in particular in Process Control and Substation Automation systems.

### BACKGROUND OF THE INVENTION

Substation Automation systems supervise, protect and control substations in high and medium-voltage electrical power networks, by means of Intelligent Electronic Devices, or Protection and Control devices, allocated to the bays and/or to the primary equipment of the substation. These devices may repeatedly need to be accessed by various users, such as commissioning or maintenance engineers. With the arrival of the latest security requirements and security standards, especially the Smart Grid security standard IEC 62351-8, the principle of central user account management including provision of user credentials to users has become an imperative for utilities. In the present context, user credentials do include IEC 62351-8 role information defining access rights to a device. Credentials of a human user may include, or are protected by means of, a user name/password combination, an IEC 62351-8 SW token or a X.509 certificate and associated private key issued by a trusted certificate authority. The certificate and/or the private key of the user may be stored on a physical token such as a USB stick, RFID tag, or Smart Card, and are accessible via an appropriate token reader.

User passwords must generally comply with password complexity policies such as minimum length, occurrence of special characters, numbers, capital letters etc. However, typical Protection and Control devices operating in industrial or utility applications may be deprived of a standard full-fledged alphanumeric keyboard or touchscreen. Likewise, these devices may be deprived of token readers required for local log-on using certificates. Yet on the other hand, typical Protection and Control devices still include a Local Human Machine Interface for local interaction between the user and the device, including a small display and a minimalistic keyboard limited to navigate on preconfigured menus.

The foregoing implies that presenting user credentials at an industrial Protection and Control device is not always feasible or at best very cumbersome to accomplish.

### DESCRIPTION OF THE INVENTION

It is therefore an objective of the invention to increase usability of central user account management in Industrial Automation and Control Systems, in particular in Substation Automation systems. This objective is achieved by a method of and an Access Enabler for granting access to an Intelligent Electronic Device according to the independent claims. Preferred embodiments are evident from the dependent claims, wherein the claim dependency shall not be construed as excluding further meaningful claim combinations.

According to the invention, a user is granted access to an Intelligent Electronic Device (IED) of a Industrial Automation and Control System (IACS), which IED has a Local Human Machine Interface (LHMI) with a set of IED keys, as follows:
(i) An Access Enabler (AE) application executed by a central user account management computer of the IACS communicatively connected to the IED authenticates the user by verifying user credentials such as a user password or a X.509 certificate that are presented to the AE by a user seeking access to the IED;
(ii) The AE module generates, or establishes, a session secret consisting of a succession of N keys or key combinations chosen, or composed, from the set of IED keys such that the session secret may be entered at the LHMI of the IED by a succession of N keystrokes;
(iii) The session secret is communicated to the user and the session secret, or a hash of the session secret to prevent against eavesdropping, is communicated to the IED;
(iv) The IED validates a secret presented, or entered, via the LHMI of the IED by the user having physically moved to the IED, and grants IED access to the user in case of matching secrets. The IED concludes on matching secrets by positively comparing the secret with the previously transmitted session secret, or by positively comparing a hash of the secret with the previously transmitted hash of the session secret.

The invention provides a solution for simplified user access to IEDs in industrial or utility operating environments compatible with IEC 62351-8, in particular to IEDs having an LHMI with a restricted IED key set. A short and temporary session secret is assigned and issued to a previously authenticated user, and at the same time forwarded to an IED for subsequent local validation of the user having moved to the IED. While the restricted IED key set excludes a full-fledged computer keyboard, it may include ten numeric keys (0...9), menu driving keys, e.g. up/down/left/right arrow, selection keys, e.g. cancel/enter, other single-purpose keys, or any combination thereof. In case of touchpads, an IED key is represented by a localized image or symbol on a touchscreen; or the IED key corresponds to a gesture on the touchscreen. In this sense the session secret chosen may be considered "IED-compatible".

In an advantageous embodiment of the invention, the AE proceeds to a remote opening, or initiating, of a user session at the IED, comprising instantaneously locking or disabling the screen of the IED. Upon validation of the session secret at the IED, the screen is unlocked, and the user may locally resume the user session. To that purpose and in order for the IED to comply with IEC 62351-8, the IED verifies the identity of the user upon initiation of the user session. This may be achieved by the AE sending username and password to the IED and the IED verifying these credentials (IEC 62351-8 PULL model), and/or by applying a user certificate and the corresponding private key in a challenge response fashion (IEC 62351-8 PUSH model), with the AE accessing the user certificates stored on a user token connected to the central user account management computer. The remote initiation of a screen-locked user session is preferred over an alternative susceptible to identity spoofing attacks, in which alternative the IED verifies the identity of the AE, and the AE exclusively transmits username and session secret to the IED.

Preferably, the AE application verifies the identity of the IED by opening a Transport Layer Security (TLS) protected communication channel involving use of TLS server certificates, i.e. by using TLS handshake to perform client authentication. The IED may also check, by consulting specific Certificate Revocation Lists (CRL), whether, at the time of logon to the IED the basic user certificates issued and signed by a trusted Certification Authority have not expired or been revoked.

Specifically, in the IEC 62351-8 PULL model where the user credentials include user identifier and user password, the session secret is chosen to be shorter, in terms of keystrokes at the LHMI of the IED, than the user password. In other words, the number N is less than a number of successive keys or key combinations required to enter the user password at the LHMI of the IED. Accordingly, as the session secret does not need to comply with the extended password complexity policies that may apply to the user password, there is no need to compose a standard alphanumeric password with the restricted set of keys of the LHMI of the IED.

Preferably, the user selects, upon successful authentication, a plurality of IEDs among the totality of IEDs of the IACS that the user intends to access. A single session secret is subsequently generated and communicated to all selected IEDs for granting IED access to the user without repeated presentation of the user password. Furthermore, the session secret is provided with a validity period or expiry date, and the IED does not grant access in case the validity period has already expired at the time of validation. Additionally, a user role may be determined and provided, and access restricted in accordance.

The present invention also relates to a computer program product including computer program code for controlling one or more processors of a central user account management computer to perform the functionality of an access enabler as claimed, particularly, a computer program product including a computer readable medium containing therein the computer program code.

### DETAILED DESCRIPTION OF PREFERRED EMBODIMENTS

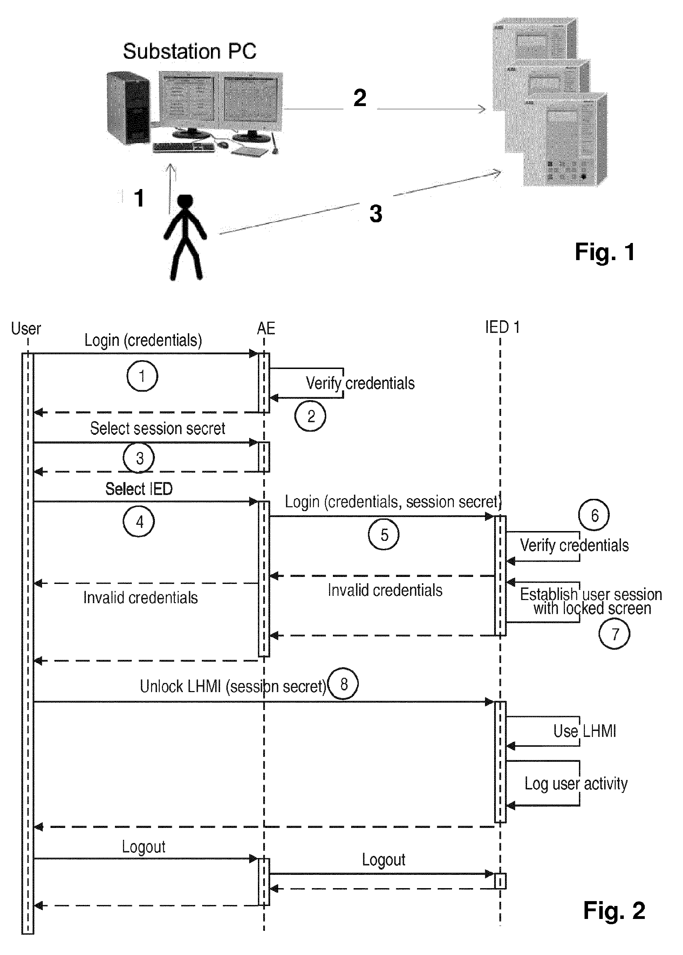

Fig.1 depicts steps of a central user account management procedure for a Substation Automation SA system according to the invention.

In a first step, a user authenticates himself, by means of his credentials and selected role, at an Access Enabler AE application running on a special workstation or substation PC. After authentication, the user selects one or more Intelligent Electronic Device IED of the SA system. The AE and the user establish at least one session secret suitable for subsequent access to the selected IEDs.

In a second step, the AE transmits the user credentials and the negotiated session secret(s) to the selected IEDs in a secure way, e.g. via SSL.

In a third step, the user physically moves to the IEDs and enters the session secret at the Local Human Machine Interface LHMI to access the IED.

Fig.2 depicts a login sequence diagram according to a variant of the invention. The AE application remotely logs into an IED and opens a user session with screen lock. Specifically:
1. The user supplies his credentials to the AE application on the central user account management computer.
2. The AE application verifies the credentials by means of a local, replicated database, or using an online account management server.
3. A session secret is established, either generated by the AE application or proposed by the user. The session secret is devised such that it can be easily entered on the IED. It may consist of numbers or a sequence of arrow and other keys present on the IED's LHMI.
4. The user selects an IED and optionally a role to be used for accessing the IED.
5. The AE application employs the user credentials including user role to login to the IED and start a screen locked LHMI session. To this end, according to the IEC 62351-8 PULL model, the user name, user role, user password and session secret are transmitted to the IED. Preferably this requires encrypted communication and prior verification of the identity of the IED.
6. The IED verifies the credentials including role information, which may include comparing a hash of the password transmitted to a hash of the user password previously stored at the IED.
7. The LHMI session is established and protected by the session secret, which implies that no activity other than presentation of a user secret is possible for this session. Following this, the use of the central user account management computer is optional, and may be limited to logout or adding more devices.
8. The user enters the session secret at the LHMI of the IED. If the secret is determined to be valid, the IED screen is unlocked. The user is logged on to the IED and allowed to act according to his role.

The approach as described above is entirely compatible with the mechanisms described in the IEC 62351-8 PULL model. In the IEC 62351-8 PUSH model, instead of transmitting user name and user password to the IED in steps 5 and 6, the latter verifies user credentials and user role by challenging the private key of the user. In other words, the IED verifies that the AE has possession of or access to, via its token reader, the private key of the user.

For emergency handling, the user may negotiate an empty session secret. In this case, the user will automatically be logged in to all selected IEDs without entering the session secret to unlock the screen. For security reasons, and/or in case regulations do so require, there must be a configuration option to disable empty secrets.

The system can be extended with several timeouts that are either locally configured on the IED or transmitted along with the user credentials. The timeouts include:
- Initial screen lock timeout. The user needs to unlock the IED within this timeout. If not, the session is terminated;
- Screen lock inactivity timeout: if the user is inactive for longer that this timeout, the screen will be locked again;
- Session inactivity timeout: If the user is inactive for longer than this timeout, the session is closed;
- Session timeout: The session will be closed after this timeout regardless of user activity.

There are several options for logout available. The user may log out and close the session at the IED or at the AE application. In the latter case, the AE application closes all HMI sessions on the IEDs.

Because the session secret may be short in absolute terms (presumably between 4 and 10 keys), it is relatively easy to hack with brute force. The following steps should be implemented to counter that problem.
- The session secret is short lived, with an initial validity period determined by the time it takes the user to move from the central user account management computer to the most peripheral IED of the system, assumed to be in the range of 5 to 30 minutes;
- The IED needs to slow down a user who enters a wrong password, by introducing dead-times of 5 minutes after entering it wrong 3 times;
- The session secret follows some complexity rules, such as at least 4 digits or 6 arrow keys containing all 4 directions.
- Login count at a specific IED in order to prevent a user from using the session secret more than a given number of times.

## Claims

1. A method of granting access to an Intelligent Electronic Device IED of an Industrial Automation and Control System IACS, wherein the IED has a Local Human Machine Interface LHMI with IED keys, comprising
- verifying, by an Access Enabler AE communicatively connected to the IED, user credentials presented by a user to the AE,
- generating a session secret consisting of a succession of keys or key combinations chosen from the IED keys,
- communicating the session secret to the user and communicating the session secret, or a hash of the session secret, to the IED,
- granting IED access to the user in case a secret subsequently presented to the IED by the user matches the session secret.

2. The method according to claim 1, comprising
- opening, by the AE, a user session at the IED on behalf of the user, and locking a screen of the LHMI; and
- unlocking, by the IED, the screen upon validation of the session secret presented by the user.

3. The method according to claim 1 or 2, wherein the user credentials include a user password, comprising
- generating a session secret including a number of keys or key combinations chosen from the IED keys less than a number of keys or key combinations required to enter the password at the LHMI of the IED.

4. The method according to claim 1 or 2, comprising
- selecting, by the user, a plurality of IEDs of the IACS, and
- generating a single session secret for all selected IEDs.

5. The method according to claim 1 or 2, comprising
- generating a session secret including validity period,
- granting IED access unless the validity period has expired.

6. The method according to claim 1 or 2, comprising
- communicating, by the AE, a role of the user to the IED, and
- granting IED access in accordance therewith.

7. An Access Enabler EA for enabling access to an Intelligent Electronic Device IED of an Industrial Automation and Control System IACS, wherein the IED is communicatively connected to the AE and has a Local Human Machine Interface LHMI with a set of IED keys, including
- a user authentication module for verifying user credentials presented by a user to the AE,
- a secret generation module for generating a session secret for subsequent IED access of the user to the IED, consisting of a succession of keys or key combinations chosen from the set of IED keys,
- a communication module for communicating the session secret to the user and for communicating the session secret to the IED.

8. The Access Enabler according to claim 7, wherein it comprises a token reader for accessing user certificates stored on a token, **characterized in that** the communication module is adapted to access the user certificates in order to respond to a challenge from the IED.

9. The Access Enabler according to claim 7, **characterized in that** the communication module is adapted to open a user session at the IED and to lock a screen of the LHMI for unlocking upon validation of the session secret presented by the user.

10. The Access Enabler according to claim 7, **characterized in that** the secret generation module is adapted to generate a single session secret for a plurality of IEDs of the IACS selected by the user.
